# EUROPEAN PATENT APPLICATION

(11) **EP 1 255 115 A2**
(43) Date of publication of application: **06.11.2002**
(21) Application number: 02007822.6
(22) Date of filing: 08.04.2002
(51) Int. Cl.: G01N 35/02, B01L 3/00

(54) **Immunoenzymatic analysis device for once-only use, and the relative analytical method**

(30) Priority: 02.05.2001 IT MI010904
(71) Applicant: DIESSE DIAGNOSTICA SENESE S.p.A., I-20123 Milano (IT)
(72) Inventor: Cocola, Francesco, 53018 Ancaiano, Siena (IT); Berti, Brunilde, 53037 S. Giminiano, Firenze (IT); Paoli, Carlo, 50023 Impruneta, Firenze (IT)
(74) Representative: Giambrocono, Alfonso, Dr. Ing.

(57) **Abstract**

The immunochemical analysis device (10) for once-only use comprises at least one housing (24,26) for receiving a well of a microtitre plate, a first cavity (14) for receiving the sample, and further cavities (16,18,20) for receiving each of the reagents necessary for executing the test.

The device enables a relative analytical method to be implemented.

## Description

The present invention relates to an immunochemical analysis device for once-only use, and an analytical method which uses it.

As is well known to the expert of the art, immunochemical analyses generally use solid phases to which substances useful for analytical purposes are bound. Numerous applicational examples can be quoted including serological determinations in which target proteins (antigens) recognized by the antibodies of the sample under examination are bound to the solid phase, or determinations in which antibodies able to specifically capture the protein (or hapten) to be assayed (for example hormones) are bound to the solid phase.

One of the most widely used means for preparing solid phases uses microtitre plate wells. These are small plastic containers, generally of polystyrene, assembled in plates for 48 or 96 determinations, which are widely used in immunochemical diagnostics and are produced in great number by firms including mainly Nunc, Labsystem, Greiner, Dynatech and Costar.

For determinations conducted with this type of support, biochemically specialized firms prepare these solid phases industrially, in practice by utilizing the property of proteins to bind to the plastic. The final user carries out the test by using a kit typically containing not only the solid phase but also one or more splittable 96-well plates, and the reagents for carrying out the test (calibrators, tracer, substrate, diluent and wash solution for the solid phase).

The kit is generally used by the expert with suitable instrumentation, based on the test to be carried out, to enable it to be automated on this type of plate. This approach is ideal for medium-large analytical routines in which the work involved in programming and preparing the reagents for the test is distributed over many tests.

To make immunochemical methods flexible and adapt them to the requirements of users with only a small number of samples to be analyzed, so-called monotests have been launched commercially. These are devices designed especially for carrying out a single test. The determination can be qualitative with subjective interpretation by the user, or quantitative if the device is processed by an instrument which gives a numerically objective result based on a memorized dose-response curve.

The present invention lies within this latter group.

In known immunochemical monotest production, generally plastic means are provided containing the reagents and having a solid phase which has been appropriately studied (to enable it to be processed by a suitable instrument produced by the actual firm which produces the device). Examples of monotests are available commercially using small test tubes, micropipette probes and filtration membranes. The limitation is represented by the fact that as an appropriate solid phase has to be devised, each producer has to acquire considerable and hence costly knowledge for each analyte.

An object of the present invention is to provide a device for once-only use which is able to receive one of the wells of said 96-well plate in such a manner as to be able to comfortably and rapidly carry out the relative immunochemical analysis.

This object is attained by the device of the present invention, characterised by comprising at least one housing for receiving a well of a microtitre plate, a first cavity for receiving the sample, and further cavities for receiving each of the reagents necessary for executing the test.

The housing for receiving said well is obviously shaped such that the type of well of interest, the shape of which can vary according to the manufacturer, can be inserted into it.

According to a variant of the invention, two housings are provided, to each receive a relative well of the plate, hence enabling two different tests to be executed on the same sample (normally it is not of interest to carry out more than two determinations on the same sample), provided obviously that the tracer and detector are common to both.

As three reagents are generally used, the cavities provided in the device to receive them are three in number.

In particular, a device of the invention suitable for carrying out for example an ELISA test would be provided with two housings to receive one or at the most two wells originating from two different said plates, a cavity for the sample and three cavities for the three reagents to be used, namely the tracer, which can be enzymatic, colorimetric, chemiluminescent or fluorescent, the diluent for the sample (if necessary) and the substrate for the tracer.

According to a further aspect of the invention, an analytical method is provided using the aforedescribed device.

The invention will be more apparent from the ensuing description of one embodiment of the device of the invention given by way of example.

In this description reference is made to the accompanying drawings, in which:
Figure 1 is a plan view of a device of the invention taken from above;
Figure 2 is a longitudinal section therethrough taken on the line 2-2 of Figure 1;
Figure 3 is a cross-section on the line 3-3 of Figure 2.

One applicational example will now be described with reference to the figures, relative to a monotest analysis on anti-*Toxoplasma gondii* IgG antibodies.

As can be seen from the figures, the device 10 is formed as a single piece of suitable plastic material. This piece comprises a gripping handle 12 and a series of cavities, of which a first cavity, shaped roughly as a lowerly closed funnel, is intended to contain the sample to be analyzed, three successive cylindrical cavities 16, 18 and 20 with a rounded base to receive the necessary reagents, and a cylindrical end cavity 22 for execution of the substrate blank.

As can be seen, the device also comprises two housings 24 and 26 (to be able to carry out two determinations on the same sample in this specific case) to receive relative wells (not shown for simplicity) of a microtitre plate (solid phase).

As can be seen from the figures, the housings 24, 26 and the cavities 14, 16, 18, 20 are all aligned. The alignment is coaxial with the axis of the handle 12.

The shape of these housings must obviously be chosen such that they can receive the wells of a determined firm.

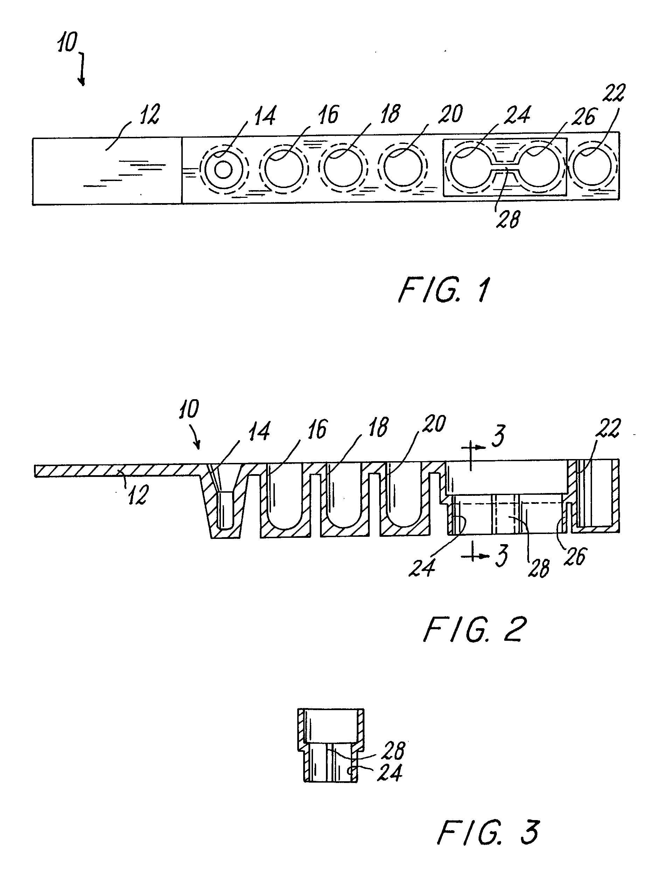

As can be seen from Figures 1 and 2, the housings 24 and 26 are connected together by a slot 28 which, because of the elasticity of the plastic material with which the device 10 is made, enables the relative wells to be forced into the housing interior, so that they remain securely retained in the relative housing. Other means can obviously be provided for retaining the wells, such as simple forcing.

In the specific illustrated example, a microtitre plate well on which antigens deriving from the protozoan parasite *Toxoplasma gondii* adhere is placed in the housing 26.

The tracer used consists of monoclonal antibodies (human anti-IgG conjugated to radish peroxidase). The solution, of optimum concentration, is contained sealed within the cavity 16, whereas the cavity 18 contains the sample diluent and the cavity 20 the substrate for the peroxidase (for example a solution of tetramethylbenzidine and hydrogen peroxide).

The apparatus for processing the device 10 provides for moving 120 ìl of diluent from the cavity 18 to the well inserted in the housing 26 and transferring the sample from the cavity 14 to the well in the housing 26 (12 ìl). The mixture reacts with the solid phase, which can be washed after 5 minutes of incubation. Generally at least three washes are carried out with a waiting time of 30 seconds between one wash and the next. The anti-human IgG tracer is then transferred from the cavity 16 to the well present in the housing 26 (120 ìl) and is reacted for a further 5 minutes, after which the wash cycle is repeated to eliminate the unreacted tracer. Finally the substrate (150 ìl) is transferred from the cavity 20 to the well in the housing 26 for the enzymatic reaction.

The colour which develops can be read photometrically (at 620-670 nm) and the optical density, obtained at a fixed time, be compared with a calibration curve already in the memory of the instrument. In this manner a quantitative assay of the single sample under examination in International Units per ml is achieved.

Inserting the microplate well into the relative housing of the device 10 is so simple that it can be done by the final user. This approach can be interesting if several parameters have to be determined on one sample with the same tracer.

In this case with a single type of device containing the common reagents the client, having available the various cavities and housings constituting the various solid phases, is able to construct the test panel which he requires.

## Claims

1. An immunochemical analysis device (10) for once-only use, **characterised by** comprising at least one housing (24, 26) for receiving a well of a microtitre plate, a first cavity (14) for receiving the sample, and further cavities (16, 18, 20) for receiving each of the reagents necessary for executing the test.

2. A device (10) for once-only use as claimed in claim 1, wherein the housings are two in number (24, 26), this enabling two determinations to be made on the same sample.

3. A device (10) for once-only use as claimed in claim 1, wherein the further cavities (16, 18, 20) are of a number equal to the number of reagents to be used.

4. A device (10) for once-only use as claimed in claim 1, wherein a gripping handle (12) is provided.

5. A device (10) for once-only use as claimed in claim 1, wherein the housings (24, 26) and the cavities (14, 16, 18, 20) are aligned.

6. A device (10) for once-only use as claimed in claims 4 and 5, wherein the alignment is coaxial with the axis of the handle (12).

7. A device (10) for once-only use as claimed in claim 1, wherein a suitable plastic material is used for its construction.

8. An analytical method, **characterised by** comprising the use of the device (10) claimed in any one of claims from 1 to 7.
